# EUROPÄISCHE PATENTSCHRIFT

(11) **EP 0 588 159 B1**
(45) Veröffentlichungstag und Bekanntmachung des Hinweises auf die Patenterteilung: **29.07.1998**
(21) Anmeldenummer: 93114035.4
(22) Anmeldetag: 02.09.1993
(51) Int. Cl.: C07F 9/53, C07F 9/40, C07F 9/32

(54) **Verfahren zur Herstellung von alpha-Carbonylphosphinoxiden**
Process for preparing alpha-carbonyl-phospine oxides
Procédé de préparation d'oxydes de phosphines alpha-carbonylées

(30) Priorität: 12.09.1992 DE 4230555
(43) Veröffentlichungstag der Anmeldung: 23.03.1994
(73) Patentinhaber: BASF Aktiengesellschaft, 67063 Ludwigshafen (DE)
(72) Erfinder: Fischer, Martin, Dr., D-6700 Ludwigshafen (DE); Hickmann, Eckhard, Dr., D-6701 Dannstadt-Schauernheim (DE); Kropp, Rudolf, D-6703 Limburgerhof (DE); Schroeder, Jochen, Dr., D-6703 Limburgerhof (DE); Trentmann, Beate, Dr., D-6800 Mannheim 31 (DE)

(56) Entgegenhaltungen:
- EP-A- 0 007 508
- EP-A- 0 049 911
- US-A- 3 351 681
- US-A- 3 515 537
- TETRAHEDRON LETTERS Bd. 24, Nr. 45, 1983, OXFORD GB Seiten 5009 - 5010 K. KANEDA 'Highly Selective Oxidation of Secondary Hydroxyl Functions Using the VO(acac)2-tbuOOH System'
- TETRAHEDRON LETTERS Bd. 33, Nr. 29, 1992, OXFORD GB Seiten 4137 - 4140 MARK S. SMYTH 'A General Method for the Preparation of Benzylic alpha,alpha-Difluorophosphonic Acids.'
- CHEMICAL ABSTRACTS, vol. 114, no. 25, 24. Juni 1991, Columbus, Ohio, US; abstract no. 247386, Seite 775 ;
- JOURNAL OF THE CHEMICAL SOCIETY, CHEMICAL COMMUNICATIONS Nr. 11, 1981, LETCHWORTH GB Seiten 511 - 513 G. MICHAEL BLACKBURN 'A Novel Synthesis of alpha- and gamma- Fluoroalkylphosphonates'
- CHEMICAL ABSTRACTS, vol. 90, no. 1, 1. Januar 1979, Columbus, Ohio, US; abstract no. 5418, Seite 508 ;
- CHEMICAL ABSTRACTS, vol. 82, no. 3, 20. Januar 1975, Columbus, Ohio, US; abstract no. 15867, Seite 420 ;
- JUSTUS LIEBIGS ANNALEN DER CHEMIE Bd. 5, 1974, WEINHEIM DE Seiten 751 - 764 HANSS-JERG KLEINER 'Herstellung und Umsetzungen von Dimethylphosphinoxid'

## Beschreibung

Die vorliegende Erfindung betrifft neue Verfahren zur Herstellung von α-Carbonylphosphinoxiden sowie neue α-Hydroxyalkyl-phosphinoxide.

α-Carbonylphosphinoxide finden als Photoinitiatoren in polymerisierbaren Massen Anwendung.

Aus der EP-A-007 508 ist ein Verfahren zur Herstellung von α-Carbonylphosphinoxiden durch Umsetzung von Carbonsäurechloriden mit Alkoxyphosphinen bekannt. Als unerwünschte Nebenprodukte bilden sich in diesen Umsetzungen stöchiometrische Mengen von Alkylchloriden. Weiterhin sind manche Saurechloride nur schwer zuganglich. So lassen sich etwa o,o-di-substituierte Benzoesäuren nur aufwendig durch Haloformreaktion aus den entsprechenden Acetophenonen herstellen (EP-A-046 194). Gerade diese Benzoesäuren sind aber Ausgangsstoffe für technisch besonders wertvolle Photoinitiatoren.

Die Umsetzung von disubstituierten Phosphinoxiden mit Aldehyden und Ketonen in Gegenwart von Basen zu α-Hydroxyalkyl-phosphinoxiden ist aus J. Am. Chem. Soc., 79, 424 (1957) bekannt. Nach dieser Methode werden u.a. am α-Kohlenstoffatom phenylsubstituierte Verbindungen hergestellt.

Die Herstellung einiger para-substituierter α-Hydroxybenzyldiphenylphosphinoxide aus Diphenylchlorphosphin, einer waßrigen Mineralsäure und einem aromatischen Aldehyd wird in J. Org. Chem., 34, 748 (1969) beschrieben, worin die para-Substituenten Methyl, Methoxy, Chlor und die Nitrogruppe umfassen.

Weiterhin ist bekannt, als selektives Oxidationsmittel für aliphatische und cycloaliphatische sekundäre Alkohole tert.- Butylhydroperoxid in Gegenwart von Vanadylacetylacetonat nach Tetrahedron Lett., 24, 5009 (1983) einzusetzen.

Aus Tetrahedron Letters Bd. 33, Nr. 29, 1992, Oxford GB, Seiten 4137-4140 (Mark S. Smyth' A General Method for the Preparation of Benylic alpha, alpha-Difluorophosphonic Acids) ist die Herstellung von Benzoyl-di(tert-butyl) phosphonsäureestern und Naphthoyl-bis (tert-butyl)phosphonsaureestern aus alpha-Hydroxyverbindungen mit Hilfe von MnO₂ bekannt.

Es bestand die Aufgabe, ein neues Verfahren zu finden, das ausgehend von gut erhaltlichen Verbindungen zu α-Carbonylphosphinoxiden führt. Weiterhin sollte ein Verfahren zur Verfügung gestellt werden, das es erlaubt, die besonders interessanten Vorstufen, nämlich am α-Kohlenstoffatom einen 2,6-disubstituierten Phenylrest tragende α-Hydroxyphosphinoxide herzustellen und in α-Carbonylphosphinoxide zu überführen.

Demgemäß wurde ein Verfahren zur Herstellung von α-Carbonylphosphinoxiden gefunden, das dadurch gekennzeichnet ist, daß man ein α-Hydroxyalkyl-phosphinoxid, das am α-Kohlenstoffatom einen 2,6-disubstituierten Phenylrest tragt, mit einem organischen Hydroperoxid oder einer organischen Persäure in Gegenwart einer Verbindung eines Metalles der 4. bis 8. Gruppe des Periodensystems oxidiert.

Außerdem wurde ein Verfahren zur Herstellung von α-Carbonylphosphinoxiden gefunden, das dadurch gekennzeichnet ist, daß man
a) ein disubstituiertes Phosphinoxid mit einem 2,6-disubstituierten Benzaldehyd zu einem α-Hydroxyalkyl-phosphinoxid umsetzt und
b) dieses Umsetzungsprodukt mit einem organischen Hydroperoxid oder einer organischen Persäure in Gegenwart einer Verbindung eines Metalles der 4. bis 8. Gruppe des Periodensystems oxidiert.

Weiterhin wurden neue α-Hydroxy-benzylphosphinoxide gefunden.

Das erstgenannte Verfahren überführt α-Hydroxyalkyl-phosphinoxide in α-Carbonylphosphinoxide. Schematisch laßt sich diese Reaktion folgendermaßen wiedergeben:

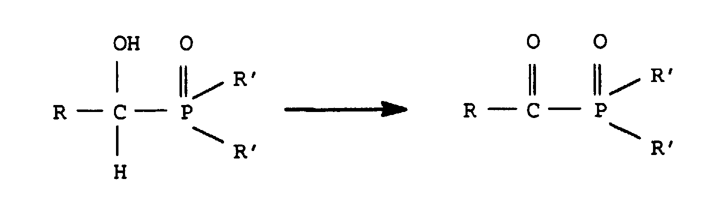

Nach den bisherigen Beobachtungen hat die Art der Substituenten R und R' auf das gute Gelingen des Verfahrens keinen merklichen Einfluß.

Die Ausgangsverbindungen sind z.T. bekannt oder können nach bekannten Methoden erhalten werden (Houben-Weyl, Methoden der organischen Chemie, Bd. 12/1, S. 154, 260, 475 (1963)).

Im Hinblick auf die hauptsächlich erwünschten Verfahrensprodukte werden solche Verbindungen bevorzugt, die folgende Substituenten am Phosphoratom tragen:
- C₁-C₁₀-Alkyl, wie Methyl, Ethyl, iso-Propyl, Butyl, Hexyl, vorzugsweise C₆-C₈-Alkyl, vor allem n-Octyl;
- C₃-C₈-Cycloalkyl, vorzugsweise Cyclopentyl und Cyclohexyl;
- Benzyl;
- C₆-C₁₀-Aryl, vorzugsweise Phenyl, wobei der Phenylrest substituiert sein kann, vorzugsweise durch Chlor, Dichlor, Methyl, Ethyl, iso-Propyl, tert.-Butyl, Dimethyl, Methoxy, Ethoxy, Dimethoxy;
- C₁-C₆-Alkoxy wie Methoxy, Ethoxy, iso-Propoxy, Butoxy, vorzugsweise Ethoxy;
- Aryloxy, wie Phenoxy oder Methylphenoxy;
- Ethyloxyethoxy;
- Benzyloxy;
- S- oder N-haltige fünf- oder sechsgliedrige Ringe wie Thienyl oder Pyridyl.

Die Substituenten können gleich oder verschieden sein.

Besonders bevorzugt sind Diphenyl-, Phenylethoxy- und Diethoxyphosphinoxid.

Die bevorzugten Verbindungen tragen am α-Kohlenstoffatom 2,6-disubstituiertes Phenyl wie 2,6-Dimethyl-, 2,6-Dichlor- und 2,4,6-Trimethylphenyl als Substituent.

Die α-Hydroxyalkyl-phosphinoxide werden mit organischen Persäuren oder organischen Hydroperoxiden umgesetzt.

Als organische Persäuren sind z.B. Peressigsäure, Perbenzoesäure und o-Chlorperbenzoesäure zu nennen. Bevorzugt werden aber organische Hydroperoxide.

Es kommen vorzugsweise tert.-Butylhydroperoxid und Cumolhydroperoxid in Betracht. Alle Hydroperoxide können in handelsüblicher, d.h. wasserhaltiger Form oder auch wasserfrei, verdünnt mit einem inerten Lösungsmittel wie tert.-Butanol, Toluol oder Cumol eingesetzt werden. In der Regel werden auf 1 mol α-Hydroxyalkyl-phosphinoxid 1 bis 3, vorzugsweise 1 bis 1,6 mol Hydroperoxid eingesetzt.

Als Katalysatoren für die Umsetzung eignen sich Verbindungen der Übergangsmetalle der Gruppen 4 bis 8. Hierbei wird die IUPAC-Nomenklatur zugrundegelegt. Die Gruppen umfassen die Titan-, Vanadium-, Chrom-, Mangan- und Eisengrupe. Von den Metallverbindungen werden solche des Vanadiums, Molybdäns und Wolframs bevorzugt. Vor allem Vanadiumpentoxid, Vanadyl(IV)-bis-diphenylphosphinat sowie ganz besonders

Vanadyl-(IV)-bis-acetylacetonat können verwendet werden. Im allgemeinen liegt die Menge an Katalysator bei 0,1 bis 10, vorzugsweise bei 0,5 bis 5 Mol-%, bezogen auf das α-Hydroxyalkyl-phosphinoxid.

Die Umsetzung wird vorteilhaft in einem inerten Lösungsmittel durchgeführt. Dafür eignen sich beispielsweise tert.- Butanol, Essigsäure, Acetonitril, Methylenchlorid, Methyl-tert.-butylether, Benzol, Toluol und Chlorbenzol. Im allgemeinen beträgt die Lösungsmittelmenge 50 bis 90 Gew.-% des Gesamtansatzes.

Alle Komponenten können vermischt werden oder es wird in einer bevorzugten Ausführungsform das Hydroperoxid-gewünschtenfalls unter Kühlung bei 0 bis 10°C - zu den übrigen Komponenten gegeben. Die Temperatur wird im Normalfall nicht über 100°C erhöht, denn meistens genügt schon Raumtemperatur, um die Reaktion in wenigen Stunden zu beenden. Da der Druck keinen erkennbaren Einfluß auf die Reaktion hat, nimmt man sie üblicherweise bei Normaldruck vor.

Die Isolierung der Produkte erfolgt nach bekannten Methoden, etwa durch Destillation oder Kristallisation.

Da die α-Hydroxyalkyl-phosphinoxide nicht handelsüblich sind, müssen sie ebenfalls hergestellt werden, wobei sich ausgehend von den Aldehyden das folgende zweiteilige Gesamtverfahren zur Herstellung der α-Carbonylphosphinoxide ergibt, welches dadurch gekennzeichnet ist, daß man
a) ein disubstituiertes Phosphinoxid mit einem 2,6-disubstituierten Benzaldehyd zu einem α-Hydroxyalkyl-phosphinoxid umsetzt und
b) dieses Umsetzungsprodukt mit einem organischen Hydroperoxid oder einer organischen Persäure in Gegenwart einer Verbindung eines Metalles der 4. bis 8. Gruppe des Periodensystems oxidiert.
Schritt (b) ist bereits oben eingehend behandelt worden.

Schematisch läßt sich die Teilreaktion (a) folgendermaßen wiedergeben:

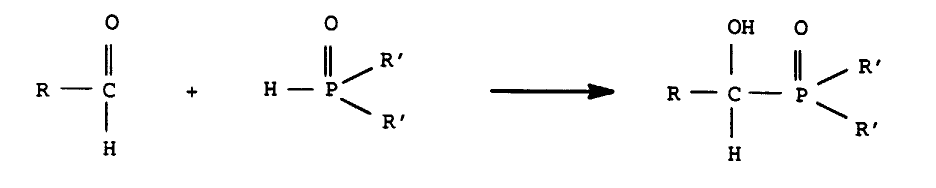

Für die Substituenten am Phosphoratom und am Aldehyd gelten die vorstehend gemachten Ausführungen zu den α-Hydroxyalkyl-phosphinoxiden entsprechend.

Die disubstituierten Phosphinoxide sind bekannt oder nach bekannten Methoden herstellbar (Houben-Weyl, Methoden der Organischen Chemie, Bd. 12/1 (1963), S. 193-199, 321; Bd. E1 (1982), S. 240-245, 274). Wirtschaftlich besonders vorteilhaft ist die Herstellung dieser Verbindungen in situ aus den entsprechenden disubstituierten Phosphinchloriden und mindestens stöchiometrischen Mengen Wasser, bevorzugt bis zu 2 mol Wasser pro mol Phosphinchlorid:

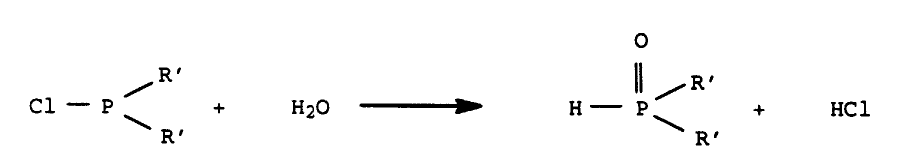

Die bei der Reaktion freiwerdende Säure kann durch Zugabe wäßriger Basen wie Alkalimetallcarbonaten, Alkalimetallhydrogencarbonaten oder Alkalimetallhydroxiden, von denen jeweils die Natriumverbindungen bevorzugt werden, neutralisiert werden. Besonders einfach ist die Neutralisation, wenn die Reaktion in einem inerten organischen Lösungsmittel ausgeführt wurde, da die organische Phase nur mit der wäßrigen Base ausgeschüttelt zu werden braucht und anschließend weiter umgesetzt werden kann.

Das disubstituierte Phosphinoxid und der Aldehyd können im molaren Verhältnis von 0,5:1 bis 1:1 eingesetzt werden, meistens werden sie jedoch in stöchiometrischen Mengen umgesetzt. Besonders günstig ist es, die Reaktion in dem organischen Lösungsmittel vorzunehmen, in dem bereits die Reaktion des Chlorphosphins zum Phosphinoxid stattfand, wie Toluol, Cyclohexan oder Petrolether. Das Verfahren wird meistens bei Raumtemperatur ausgeübt, da die Reaktionszeiten mit wenigen Minuten bis Stunden im allgemeinen befriedigend sind. Es kann aber natürlich auch bei erhöhter Temperatur ausgeführt werden. Wegen der einfachen technischen Durchführung wird in der Regel bei Normaldruck gearbeitet.

Es hat sich als vorteilhaft erwiesen, die Umsetzung in Gegenwart eines Katalysators vorzunehmen. Dieser kann ein Alkoholat wie Methylat, Ethylat und iso-Propylat sein, wobei die Natriumalkoholate bevorzugt werden. Weiterhin sind Alkalifluoride wie Natriumfluorid und Kaliumfluorid geeignete Verbindungen. Diese Katalysatoren kannen in Mengen von 0,01 bis 10, vorzugsweise 0,1 bis 1 Mol-%, bezogen auf den Aldehyd, eingesetzt werden. Die Isolierung der Verbindungen geschieht nach bekannten Methoden, vorzugsweise durch Kristallisation.

In einer Variante der beschriebenen Reaktion kann die Hydrolyse eines disubstituierten Phosphinchlorides in Gegenwart des Aldehydes vorgenommen werden und das so erhaltene Reaktionsgemisch kann direkt nach der Neutralisation des Gemisches mit einem organischen Hydroperoxid oder einer organischen Persäure in Gegenwart einer Metallverbindung der Gruppen 4 bis 8 des Periodensystemes umgesetzt werden.

Nach dem beschriebenen Verfahrensteilschritt (a) können α-Hydroxy-benzylphosphinoxide der allgemeinen Formel I 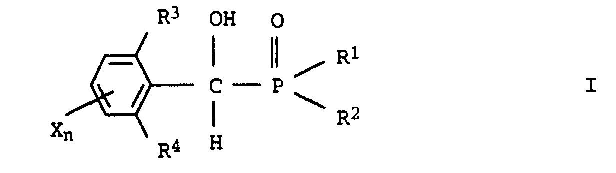 hergestellt werden, in der die Variablen folgende Bedeutung haben:
- R¹, R²: C₁-C₁₈-Alkyl, vorzugsweise C₆-C₈-Alkyl wie Hexyl und Octyl;
C₅-C₈-Cycloalkyl, wie Cyclohexyl;
C₆-C₁₂-Aryl, wie vor allem Phenyl, das besonders durch Alkylgruppen wie Methyl, Ethyl, iso-Propyl, Alkoxygruppen wie Methoxy oder Ethoxy ein- oder mehrfach substituiert sein kann;
C₁-C₈-Alkoxy, vorzugsweise C₁-C₄-Alkoxy wie Methoxy, Ethoxy, iso-Propoxy, n-Butoxy;
- R³, R⁴: C₁-C₆-Alkyl, vorzugsweise Methyl und Ethyl C₁-C₆-Alkoxy, Methoxy und Ethoxy;
Halogen, vorzugsweise Chlor und Brom;
- x: C₁-C₆-Alkyl, vorzugsweise Methyl;
C₁-C₆-Alkoxy, vorzugsweise Methoxy;
Halogen, vorzugsweise Chlor;
Nitro, C₁-C₄-Dialkylamino, Cyano;
- n: 0 bis 3 (wobei die Substituenten im Falle n > 1 gleich oder verschieden sein können), vorzugsweise 0 oder 1.

Als bevorzugte Beispiele der α-Hydroxybenzylphosphinoxide I seien genannt:
α-Hydroxy-(2,6-dimethylbenzyl)-diphenylphosphinoxid
α-Hydroxy-(2,6-dichlorbenzyl)-diphenylphosphinoxid
α-Hydroxy-(2,6-dimethoxybenzyl)-diphenylphosphinoxid
α-Hydroxy-(2,4,6-trimethylbenzyl)-diphenylphosphinoixd
α-Hydroxy-(3-chlor-2,4,6-trimethylbenzyl)-diphenylphosphinoxid
α-Hydroxy-(2,6-dimethylbenzyl)-bis-(2,5-dimethoxyphenyl)phosphinoxid
α-Hydroxy-(2,6-dimethylbenzyl)-bis-(4-methylphenyl)phosphinoxid
α-Hydroxy-(2,4,6-trimethylbenzyl)-bis-(2,5-dimethylphenyl)phosphinoxid
α-Hydroxy-(2,4,6-trimethylbenzyl)-phenyl-ethoxyphosphinoxid

Das erfindungsgemäße Verfahren erlaubt die Herstellung von α-Hydroxyalkyl-phosphinoxiden und deren einfache Oxidation zu den entsprechenden α-Carbonylphosphinoxiden. Außerdem können die besonders wertvollen α-Hydroxyalkyl-phosphinoxide, die eine 2,6-disubstituierte Phenylgruppe am α-Kohlenstoffatom tragen, aus gut zugänglichen Ausgangsmaterialien hergestellt werden.

α-Carbonylphosphinoxide finden als Photoinitiatoren in polymerisierbaren Massen wie Aufzeichnungsmassen oder Lacken Verwendung (EP-A 007 508).

### Beispiele

### 1. Herstellung von α-Hydroxyalkyl-phosphinoxiden (Verfahrensschritt (a)

### Beispiel 1

### Herstellung von α-Hydroxy-(2,4,6-trimethylbenzyl)-diphenylphosphinoxid (aus Chlordiphenylphosphin)

Zu einer Mischung aus 9 g (0,5 mol) Wasser und 200 ml Toluol wurden 110 g (0,5 mol) Diphenylchlorphosphin in 200 ml Toluol gegeben. Nach 1 h wurde das Reaktionsgemisch mit 90 ml 20 gew.-%iger Natronlauge extrahiert, und die organische Phase mit 74 g (0,5 mol) 2,4,6-Trimethylbenzaldehyd sowie 0,5 g 30 %iger Natriummethylatlösung in Methanol versetzt. Das Produkt begann nach 10 Minuten zu kristallisieren; wonach es wie üblich isoliert wurde.
Ausbeute 95 %
Smp.: 152-153°C
¹H-NMR (DMSO): 2,03 (br, 6H); 2,16 (s, 3H); 5,91 (dd, 1H); 6,25 (dd, lH); 6,68 (s, 2H); 7,38-7,88 (10 H) ppm
³¹P-NMR (DMSO): 28,5 ppm

### Beispiel 2

### Herstellung von α-Hydroxy-(2,4,6-trimethylbenzyl)-diphenylphosphinoxid (aus Diphenylphosphinoxid)

101 g (0,5 mol) Diphenylphosphinoxid und 74 g (0,5 mol) 2,4,6-Trimethylbenzaldehyd in 150 ml Toluol wurden mit 0,5 g einer 30 gew.-%igen Natriummethylatlösung versetzt. Das Produkt begann nach 10 Minuten zu kristallisieren und wurde wie Üblich isoliert.
Ausbeute: 98 %

### Beispiel 3

### Herstellung von α-Hydroxy-(2,6-dichlorbenzyl)-diphenylphosphinoxid

In Analogie zu Beispiel 1.1 wurden 87,5 g (0,5 mol) 2,6-Dichlorbenzaldehyd umgesetzt.
Ausbeute: 96 %
Smp.: 205-209°C
¹H-NMR (DMSO): 6,37 (dd, 1H); 6,67 (dd, 1H); 7,22-7,93 (14 H) ppm
³¹P-NMR (DMSO): 25,9 ppm

### 2. Herstellung von α-Carbonylphosphinoxiden (Verfahrensschritt b)

### Beispiel 4

### Herstellung von 2,4,6-Trimethylbenzoyl-diphenylphosphinoxid

31,5 g (0,1 mol) α-Hydroxy-(2,4,6-trimethylbenzyl)-diphenylphosphinoxid und 0,9 g (3,4 mmol) Vanadyl-(IV)-bis-acetylacetonat wurden in 150 g Chlorbenzol in 30 Minuten bei 5°C mit 15 g (0,12 mol) 70 gew.-%igem, wäßrigem tert.-Butylhydroperoxid versetzt und 20 h bei Raumtemperatur gerührt.
Das Produkt wurde durch Kristallisation isoliert.
Ausbeute: 82 %
Smp.: 92-94°C.

Verwendet man anstelle von tert.-Butylhydroperoxid 17,2 g (0,10 mol) m-Chlorperbenzoesäure, beträgt die Ausbeute 49 %.

### Beispiel 5

### Herstellung von 2,6-Dichlorbenzoyl-diphenylphosphinoxid

15 g (0,04 mol) α-Hydroxy-(2,6-dichlorbenzyl)-diphenylphosphinoxid und 0,4 g (1,5 mmol) Vanadyl-(IV)-bis-acetylacetonat in 100 g Chlorbenzol wurden mit 12,9 g (0,1 mol) 70 gew.-%igem, wäßrigen tert.-Butylhydroperoxid versetzt und 5 h bei 70°C gehalten. Das Produkt wurde durch Kristallisation isoliert.
Ausbeute: 64 %
Smp.: 156-158°C.

### Beispiel 6

### Herstellung von (3-Chlor-2,4,6-trimethylbenzoyl)-diphenylphosphinoxid

15,4 g (0,04 mol) α-Hydroxy-13-chlor-2,4,6-trimethylbenzyl)-diphenylphosphinoxid und 0,4 g (1,5 mmol) Vanadyl-(IV)-bisacetylacetonat in 100 g Chlorbenzol wurden mit 8,2 g (0,06 mol) 70 gew.-%igem waßrigen tert.-Butylhydroperoxid versetzt und nach 20 h durch Kristallisation isoliert.
Ausbeute: 81 %
Smp.: 125-126°C.

### Beispiel 7

### Herstellung von 2,4,6-Trimethylbenzoyl-phenylethoxyphosphinoxid

26,5 g (0,08 mol) α-Hydroxy-12,4,6-trimethylbenzyl)-phenylethoxy-phosphinoxid und 1 g (38 mmol) Vanadyl-(IV)-bisacetylacetonat in 110 g Chlorbenzol wurden mit 28 g (0,22 mol) 70 gew.-%igem, waßrigem tert.-Butylhydroperoxid versetzt und 20 h gerührt. Das Produkt wurde durch Destillation isoliert.
Ausbeute: 55 %
Sdp.: 180°C (0,1 mbar)

### Beispiel 8

### Herstellung von Butyryl-phosphonsäure-diethylester (Butyryldiethoxyphosphinoxid)

16,2 g (77 mmol) α-Hydroxy-butyl-phosphonsaurediethylester und 0,4 g (1,5 mmol) Vanadyl-(IV)-bis-acetylacetonat in 100 g Chlorbenzol wurden mit 30,4 g (0,24 mol) 70 gew.-%igem, wäßrigem tert.-Butylhydroperoxid versetzt und 4 Tage gerührt. Das Lösungsmittel wurde im Vakuum entfernt.
Ausbeute (im Rückstand): 25 %

### 3. Herstellung von α-Carbonylphosphinoxiden (Verfahrensschritte a und b)

### Beispiel 9

### Herstellung von 2,4,6-Trimethylbenzoyldiphenyl-phosphinoxid

Zu 2,2 kg Chlorbenzol, 50 g Wasser und 370 g (2,5 mol) 2,4,6-Trimethylbenzaldehyd wurden 550 g (2,5 mol) Diphenylchlorphosphin gegeben. Nach 1 h Rühren bei Raumtemperatur wurden 500 g 20 gew.-%iger Natronlauge zugesetzt.

Nach Zugabe von 20 g (75 mmol) Vanadyl-(IV)-bis-acetylacetonat wurde das Reaktionsgemisch bei 5 bis 10°C mit 482 g (3,75 mol) 70 gew.-%igem wäßrigem tert.-Butyl-hydroperoxid versetzt. Nach 6 h wurde mit 20 gew.-%iger Natronlauge ein pH-Wert von 9 eingestellt, die Phasen getrennt und das Produkt durch Kristallisation isoliert.
Ausbeute: 85 %.

## Patentansprüche

1. Verfahren zur Herstellung von α-Carbonylphosphinoxiden, dadurch gekennzeichnet, daß man ein α-Hydroxyalkylphosphinoxid, das am α-Kohlenstoffatom einen 2,6-disubstituierten Phenylrest trägt, mit einem organischen Hydroperoxid oder einer organischen Persäure in Gegenwart einer Verbindung eines Metalles der 4. bis 8. Gruppe des Periodensystems oxidiert.

2. Verfahren nach Anspruch 1, dadurch gekennzeichnet, daß man ein α-Hydroxyalkyl-phosphinoxid, das am Phosphoratom phenyl- und/oder ethoxysubstituiert ist, oxidiert.

3. Verfahren zur Herstellung von α-Carbonylphosphinoxiden, dadurch gekennzeichnet, daß man
a) ein disubstituiertes Phosphinoxid mit einem 2,6-disubstituierten Benzaldehyd zu einem α-Hydroxyalkyl-phosphinoxid umsetzt und
b) dieses Umsetzungsprodukt mit einem organischen Hydroperoxid oder einer organischen Persaure in Gegenwart einer Verbindung eines Metalles der 4. bis 8. Gruppe des Periodensystems oxidiert.

4. Verfahren nach Anspruch 3, dadurch gekennzeichnet, daß man in Stufe (a) ein phenyl- und/oder alkoxysubstituiertes Phosphinoxid einsetzt.

5. α-Hydroxy-(2,4,6-trimethylbenzyl) diphenylphosphinoxid.

6. α-Hydroxy-(2,4,6-trimethylbenzyl)-phenyl-ethoxyphosphinoxid.

## Claims

1. A process for preparing α-carbonylphosphine oxides, which comprises oxidizing an α-hydroxyalkylphosphine oxide whose α-carbon atom carries a 2,6-disubstituted phenyl radical with an organic hydroperoxide or an organic peracid in the presence of a compound of a metal from groups 4 to 8 of the Periodic Table.

2. A process as claimed in claim 1, wherein an α-hydroxyalkylphosphine oxide whose phosphorus atom is substituted by phenyl and/or ethoxy is oxidized.

3. A process for preparing α-carbonylphosphine oxides, which comprises
a) reacting a disubstituted phosphine oxide with a 2,6-disubstituted benzaldehyde to give an α-hydroxyalkylphosphine oxide and
b) oxidizing this reaction product with an organic hydroperoxide or an organic peracid in the presence of a compound of a metal from groups 4 to 8 of the Periodic Table.

4. A process as claimed in claim 3, wherein a phenyl- and/or alkoxy-substituted phosphine oxide is employed in stage (a).

5. α-Hydroxy (2,4,6-trimethylbenzyl)diphenylphosphine oxide.

6. α-Hydroxy (2,4,6-trimethylbenzyl)phenylethoxyphosphine oxide.

## Revendications

1. Procédé de préparation d'oxydes d'α-carbonylphosphine, caractérisé en ce qu'on oxyde un oxyde d'α-hydroxyalkylphosphine portant sur l'atome de carbone a un radical phényle 2,6-disubstitué, avec un hydroperoxyde organique ou un peracide organique, en présence d'un composé d'un métal du 4ème au 8ème Groupe du Tableau Périodique.

2. Procédé selon la revendication 1, caractérisé en ce qu'on oxyde un oxyde d'α-hydroxyalkylphosphine qui, sur l'atome de phosphore, est substitué par un substituant phényle et/ou éthoxy.

3. Procédé de préparation d'oxydes d'α-carbonylphosphine, caractérisé en ce que
a) on fait réagir un oxyde de phosphine disubstitué avec un benzaldéhyde 2,6-disubstitué, pour obtenir un oxyde d'α-hydroxyalkylphosphine, et
b) on oxyde ce produit de réaction avec un hydroperoxyde organique ou un peracide organique en présence d'un composé d'un métal du 4ème au 8ème Groupe du Tableau Périodique.

4. Procédé selon la revendication 3, caractérisé en ce qu'on utilise dans l'étape (a) un oxyde de phosphine à substitution phényle et/ou alcoxy.

5. Oxyde d'α-hydroxy-(2,4,6-triméthylbenzyl)diphénylphosphine.

6. Oxyde d'α-hydroxy-(2,4,6-triméthylbenzyl)-phényléthoxyphosphine.
